# EUROPÄISCHE PATENTSCHRIFT

(11) **EP 3 427 986 B1**
(45) Veröffentlichungstag und Bekanntmachung des Hinweises auf die Patenterteilung: **16.06.2021**
(21) Anmeldenummer: 18178386.1
(22) Anmeldetag: 19.06.2018
(51) Int. Cl.: B60K 1/04, B60K 11/02, B60K 1/00

(54) **KRAFTFAHRZEUG MIT WENIGSTENS EINEM ELEKTROANTRIEB, INSBESONDERE ELEKTROBUS**
MOTOR VEHICLE WITH AT LEAST ONE ELECTRIC DRIVE, IN PARTICULAR ELECTRIC BUS
VÉHICULE AUTOMOBILE À AU MOINS UN ENTRAÎNEMENT ÉLECTRIQUE, EN PARTICULIER UN BUS ÉLECTRIQUE

(30) Priorität: 12.07.2017 DE 102017115605
(43) Veröffentlichungstag der Anmeldung: 16.01.2019
(73) Patentinhaber: MAN Truck & Bus SE, 80995 München (DE)
(72) Erfinder: Kratzer, Sebastian, 85757 Karlsfeld (DE); John, Dennis, 80992 München (DE); von Esebeck, Götz, 15831 Blankenfelde-Mahlow (DE)
(74) Vertreter: v. Bezold & Partner Patentanwälte - PartG mbB

(56) Entgegenhaltungen:
- DE-U1-202016 104 744
- US-A- 5 567 544
- US-A1- 2007 215 398
- US-A1- 2015 175 210

## Beschreibung

Die Erfindung betrifft ein Kraftfahrzeug mit einem Elektroantrieb, insbesondere einen Elektrobus, nach dem Oberbegriff des Anspruchs 1.

Bei Serien-Personenkraftwagen mit einem Elektroantrieb ist es allgemein bekannt die relativ schweren Traktionsbatterien und/oder Zusatzaggregate wegen einer optimierten Gewichtsverteilung im Bodenbereich des Kraftfahrzeugs anzuordnen. Es besteht jedoch auch die Möglichkeit, insbesondere bei größeren Kraftfahrzeugen diese Komponenten im Dachbereich anzuordnen.

Dazu ist es beispielsweise bekannt, Stadtbusse, die ursprünglich für konventionelle Antriebe mit Verbrennungsmotoren entwickelt wurden, nachträglich zu Elektro- oder Hybridfahrzeugen weiterzuentwickeln. Solche umgerüstete Elektrobusse sind jedoch nicht optimal geeignet, einen elektrischen Antrieb sowie erforderliche Traktionsbatterien und die notwendigen Zusatzaggregate aufzunehmen. Es sind solche umgerüstete Elektrobusse allgemein bekannt, bei denen Traktionsbatterien und Zusatzaggregate auf dem Busdach mittels schwerer Träger angeordnet sind. Solche Konstruktionen sind nicht von vornherein für Elektrobusse entwickelt worden und daher weder gewichts- noch kostenoptimiert. Weiterhin ergeben sich hierdurch große Restrektionen beim Produktdesign sowie in der maximal zulässigen Fahrzeughöhe, sodass damit keine optimale Serienlösung vorliegt.

Für eine möglichst effiziente Unterbringung einer Batterie im Fahrzeug schlägt die US 5,567,544 daher eine Lösung vor, bei der die Funktionskomponenten der Batterie gleichzeitig als strukturelle Elemente für das Fahrzeug dienen. Dazu ist die Batterie in Form einer leichten Strukturplatte aufgebaut, welche gestapelte isolierte Batteriezellen beinhaltet. Nachteilig an dieser Lösung ist jedoch, dass dies lediglich eine Aufnahme der Batteriezellen, nicht jedoch weiterer übliche Komponenten eines Batteriesystems, wie z. B. Zellmodulcontroller, Schützboxen, Kühlungseinrichtungen etc., ermöglicht.

Weiterhin ist auch aus der US 2015/0175210 A1 eine Rahmenstrukturanordnung für ein Fahrzeug bekannt, umfassend einen flächigen Rahmenkern, der auf der Unterseite einer tragenden Paneelfläche montiert ist. Der Rahmenkern ist dabei eine dreidimensionale Struktur aus Blech oder linearen Profilen und kann als eine Reihe von benachbarten dreieckigen Prismen betrachtet werden, die sich quer zur Ebene der Stirnwand erstrecken, wobei die dreieckigen Prismen ein spezifisches Muster von abwechselnden dreieckigen Öffnungen auf jeder ihrer drei Seitenflächen aufweisen. Aufgrund dieser Ausgestaltung der Rahmenstrukturanordnung können auf vorteilhafte Weise Funktionalitäten eines Strukturteils eines Fahrzeugchassis mit den Funktionalitäten eines Gehäuses für Fahrzeugkomponenten kombiniert werden.

Aufgabe der Erfindung ist es, ein Kraftfahrzeug mit einem Elektroantrieb, insbesondere einen Elektrobus, bereitzustellen, bei dem Komponenten des Elektroantriebs, insbesondere Traktionsbatterien und/oder Zusatzaggregate, im Dachbereich kosten-, gewichts- und packageoptimal verbaut werden können mit der zusätzlichen Möglichkeit eines optimierten Designs.

Diese Aufgabe wird gelöst mit den Merkmalen des unabhängigen Patentanspruchs 1. Bevorzugte Weiterbildungen sind in den Unteransprüchen offenbart.

Durch die erfindungsgemäße Integration von Busdach-Komponententräger und Komponenten, insbesondere von Traktionsbatterien und Zusatzaggregaten, kann vorteilhaft auf effektive Weise eine gewichts-, kosten-, package- und designoptimierte Anordnung von Komponenten eines Elektroantriebs eines Kraftfahrzeugs, insbesondere eines Elektrobusses, realisiert werden.

Der vorstehende integrierte Dachaufbau kann für eine Vielzahl von Fahrzeugen sowohl mit wenigstens einem ausschließlichen bzw. reinen Elektroantrieb als auch für Fahrzeuge mit einem Elektroantrieb und einem zusätzlichen Verbrennungsmotor als Hybridfahrzeug vorteilhaft verwendet werden.

Je nach den Gegebenheiten kann die Sandwich-Unterwand und/oder die Sandwich-Oberwand durch ein flächiges Strangpressprofil und/oder durch eine umgeformte Blechplatine gebildet werden. Dazu können materialeinheitliche Blechplatinen gleicher Stärke oder gegebenenfalls auch gewichts- und steifigkeitsoptimierte Kombinationen unterschiedlicher Blechplatinenteile (Tailored Blank) verwendet werden. Zudem können die Sandwich-Unterwand und/oder die Sandwich-Oberwand zusätzlich zu den sie verbindenden Versteifungselementen selbst zumindest in Teilbereichen Versteifungsrippen und/oder Designelemente aufweisen, welche beispielsweise durch Sicken oder durch Verschweißen oder Verkleben aufgebrachte Rippenelemente gebildet sein können.

Die Versteifungselemente zwischen der Sandwich-Unterwand und der Sandwich-Oberwand sollen bevorzugt längs- und/oder quer sowie vertikal zum Fahrzeug ausgerichtet und angeordnet sein, dergestalt, dass Versteifungselemente untereinander und Versteifungselemente und Sandwich-Seitenwände quaderförmige Komponenten-Kompartiments ausbilden, die in ihrer Größe den aufzunehmenden Komponenten des Elektroantriebs, insbesondere der Größe von Traktionsbatterien, für Einzel- oder Mehrfachanordnungen in dem jeweiligen Komponenten-Kompartiment angepasst sind. Dadurch ergibt sich vorteilhaft eine optimale Bauraumausnützung bei optimaler Aussteifung. Je nach den Anforderungen und Gegebenheiten können die Versteifungselemente zwischen der Sandwich-Unterwand und der Sandwich-Oberwand unterschiedliche oder auch in Kombination als einfache Träger und/oder Fachwerke und/oder Schaumwerkstoffelemente ausgebildet sein, wobei gegebenenfalls auch wenigstens ein Komponenten-Kompartiment insgesamt ausgeschäumt sein kann.

In einer bevorzugten Weiterbildung sind die Sandwich-Unterwand und die Sandwich-Oberwand, insbesondere im Bereich von Fahrzeugseitenwänden, zur Ausbildung dichter seitlicher Begrenzungswände dicht verbunden oder verbindbar. Zudem kann dann ein solches Sandwichstrukturteil als Fahrzeugdach auf die Fahrzeugseitenwände einer Karosserie aufgesetzt und dort, insbesondere durch Verschrauben und/oder Kleben und/oder Schweißen und/oder Nieten, dicht mit den Fahrzeug-Seitenwänden verbunden werden.

Erfindungsgemäß ist in einem solchen Sandwich-Strukturelement ein ganzes Traktionsbatteriesystem aufgenommen, welches insbesondere eine Schützbox, ein Batteriemanagementsystem (BMS), Zellen, Zellmodule, Zellmodul-Kontroller, eine Kühlung und wenigstens einen Kabelbaum als 12V-Kabelbaum und/oder 24V-Kabelbaum und/oder Hochvolt-Kabelbaum aufweisen kann. Wenigstens eine weitere Komponente ist als Zusatzaggregat im Sandwichstrukturelement aufgenommen, insbesondere eine Klimaanlage, ein Hochvoltverteiler, Ladegeräte, Inverter, Heizaggregate, Bremswiderstände, ein Pantograph-Ladesystem, Kühlungsaggregate mit insbesondere Pumpen, Lüftern, Ventilen, Kühler, Chiller und/oder Verbindungselemente zur Montage der Komponenten in den Komponenten-Kompartiments. Somit können vorteilhaft bis auf den Elektromotor, der zweckmäßig am Antriebsstrang angeordnet ist, praktisch alle weiteren erforderlichen Komponenten des Elektroantriebs im Dachstrukturteil mit vorteilhaft engem Package aufgenommen und integriert sein.

Das Sandwichstrukturelement als Dachstrukturteil soll insgesamt wasserdicht mit wasserdichten Komponenten-Kompartiments ausgebildet sein. Die aufgenommenen Komponenten benötigen daher selbst kein wasserdichtes Komponentengehäuse, können jedoch auch für eine redundante Wasserdichtheit mit einem wasserdichten Komponentengehäuse verbaut werden.

Zur Kühlung der im Sandwichstrukturelement aufgenommenen Komponenten des Elektroantriebs kann vorteilhaft im oder am Sandwichstrukturelement ein Komponentenkühlsystem vorgesehen sein mit von einem Kühlmedium, insbesondere von Wasser, Wasser-Glykol oder einem Kältemittel, durchströmten Kühlsystemelementen. Dazu kann, dort wo es erforderlich ist, zweckmäßig zumindest ein Teil der Sandwich-Unterwand als Kühlsystemelement, vorzugweise als auf die Sandwich-Unterwand montierte Kühlplatte, ausgebildet sein. Zusätzlich oder alternativ können auch kühlmitteldurchströmte Kühlsystemelemente durch Wandbereiche der Komponenten-Kompartiments gebildet sein, wobei gegebenenfalls eine Verrohrung intern im Sandwichstrukturelement oder extern für eine Versorgung durchgeführt sein kann.

Je nach den individuellen Erfordernissen des Fahrzeugs und seines Elektroantriebs kann das erfindungsgemäße Sandwichstrukturelement mit seinen Komponenten-Kompartiments den gesamten Dachbereich des Kraftfahrzeugs, insbesondere eines Elektrobusses, bilden. Alternativ kann jedoch ein erfindungsgemäßes Sandwichstrukturelement nur einen Teil des Dachbereichs bilden, insbesondere dann, wenn vergleichsweise weniger Traktionsbatterien, beispielsweise für ein Hybridfahrzeug, erforderlich sind. Der übrige Dachbereich kann dann durch die Sandwich-Unterwand als Dachboden oder aus vergleichsweise dünneren und leichteren Sandwichstrukturelementen gebildet sein.

Für variable Anordnungen und Größen kann das Sandwichstrukturteil zumindest in Teilbereichen aus an Vertikalwänden dicht aneinandergefügten Sandwichstrukturmodulen gebildet sein, wobei bevorzugt vorgesehen ist, dass jedes Sandwichstrukturmodul wenigstens ein Komponenten-Kompartiment ausbildet. Die Sandwichstrukturmodule können je nach Anzahl und Anordnung auch dicht an andere Dachelemente angeschlossen sein. Mit einem solchen Baukasten aus Sandwichstrukturmodulen können variable, an die jeweiligen Gegebenheiten, insbesondere an eine variierende Anzahl von Traktionsbatterien, angepasste Anordnungen realisiert werden. Diese Sandwichstrukturmodule können gegenseitig funktional, elektrisch, mechanisch und logistisch verbunden sein.

Für die Zugänglichkeit zu den Komponenten ist es bevorzugt, wenn am Sandwichstrukturteil und/oder an den Sandwichstrukturmodulen seitlich und/oder oben wenigstens eine Wartungsklappe angeordnet ist.

Anhand einer Zeichnung wird die Erfindung an Ausführungsbeispielen weiter erläutert.

Es zeigen:
- Figur 1: einen schematischen Querschnitt durch einen Bus mit detailliert dargestelltem Dachaufbau,
- Figur 2: eine modifizierte Draufsicht auf einen Teilbereich des Busdachs nach Figur 1, und
- Figur 3: eine schematische Seitenansicht eines Busses mit einem alternativen Dachaufbau.

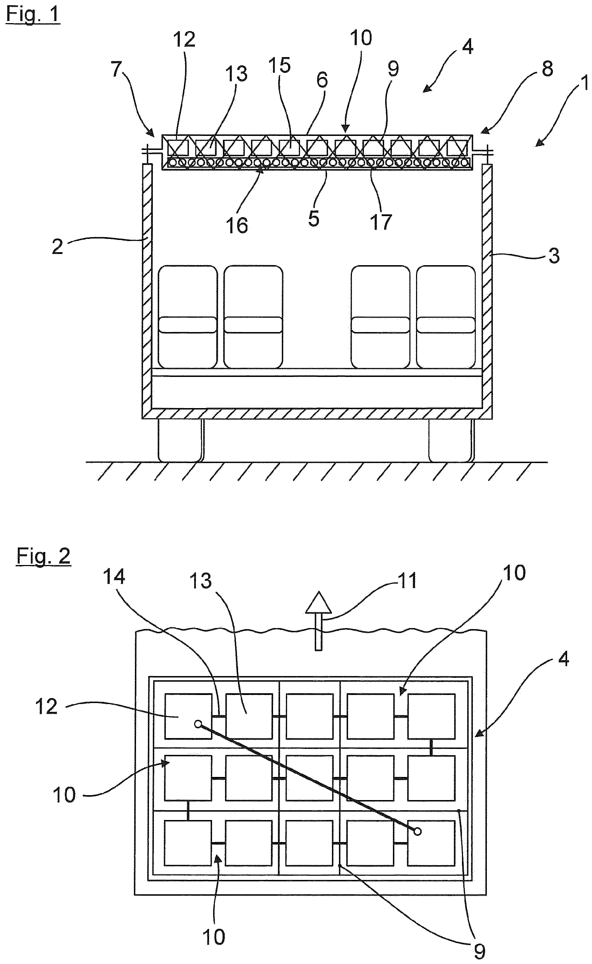

In Figur 1 ist ein stark schematisierter Querschnitt durch einen Elektrobus 1 dargestellt mit Bus-Seitenwänden 2, 3, auf die als Fahrzeugdach ein mehrschichtiges Dachstrukturteil als Sandwichstrukturelement 4 aufgesetzt ist.

Das Sandwich-Strukturelement 4 besteht aus einer Sandwich-Unterwand 5 als Dachboden und einer davon durch einen Zwischenraum beabstandeten Sandwich-Oberwand 6 als Dachaußenwand. Die Sandwich-Unterwand 5 und die Sandwich-Oberwand 6 sind im gezeigten Ausführungsbeispiel aus umgeformten Blechplatinen gebildet, die jeweils seitlich abgebogen und zu seitlichen Begrenzungswänden 7, 8 dicht verbunden sind und dort auf die Busseitenwände 2, 3 aufgesetzt sind.

Die Sandwich-Unterwand 5 und die Sandwich-Oberwand 6 sind mit einem Fachwerk von Versteifungsrippen 9 verbunden, welche längs und quer sowie vertikal zum Fahrzeug angeordnet sind, dergestalt dass die Versteifungsrippen 9 untereinander sowie mit den seitlichen Begrenzungswänden 7, 8 quaderförmige Komponenten-Kompartiments 10 bilden, welche in ihrer Größe den dort aufzunehmenden Komponenten des Elektroantriebs des Elektrobus für eine Einzel- oder Mehrfachaufnahme angepasst sind.

Diese Komponenten-Kompartiments 10 sind in einer gegenüber Figur 1 etwas modifizierten Anordnung aus der Draufsicht in Figur 2 ersichtlich, wobei zur Sichtbarmachung die Sandwich-Oberwand 6 weggelassen wurde. Das Sandwichstrukturelement 4 bildet hier nur einen hinteren Dachbereich des Elektrobus 1. Zur Frontseite des Elektrobus 1 hin (Pfeil 11) schließt sich an das Sandwichstrukturelement 4 ein weiterer Dachbereich aus dünneren und leichteren Sandwichstrukturelementen an.

Als Komponenten des Elektroantriebs des Elektrobus 1 sind hier beispielhaft in den Komponenten-Kompartiments 10 des Sandwichstrukturelements 4 eine Schützbox 12 mit einem Batteriemanagementsystem (BMS) sowie anschließende Batteriezellen/Zellenmodule von Traktionsbatterien 13 aufgenommen, welche miteinander elektrisch mit einem Kabelbaum 14 (Hochvolt- und Niedervolt-Kabelbaum) verbunden sind.

Wie aus Figur 1 ersichtlich, sind hier zudem weitere Zusatzaggregate 15 sowie ein Komponenten-Kühlsystem 16 im Sandwichstrukturelement 4 aufgenommen.

Das Komponenten-Kühlsystem 16 umfasst hier, wie in Fig. 1 dargestellt, eine auf die Sandwich-Unterwand 5 aufgebrachte Kühlplatte 17, die ein kühlmitteldurchströmtes Rohrsystem aufweist.

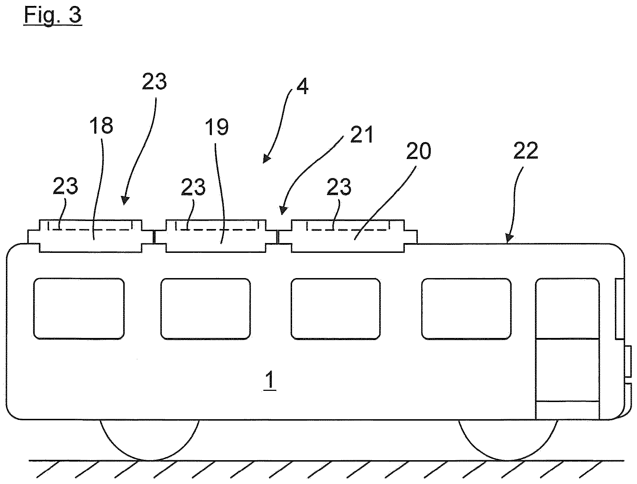

In Figur 3 ist eine stark schematisierte Seitenansicht eines Elektrobus 1 dargestellt, mit einem modifizierten Dachstrukturteil, dergestalt, dass das in der hinteren Dachhälfte angeordnete Sandwichstrukturelement 4 als Baukasten aus Sandwichstrukturmodulen 18, 19, 20 besteht, welche hier an Vertikalwänden mittels Dichtungen 21 aneinandergefügt sind. Jedes dieser Sandwichstrukturmodule 18, 19, 20 bildet hier mehrere Komponenten-Kompartiments 10 aus, in denen jeweils wenigstens eine Komponente des Elektroantriebs aufgenommen ist. Der vordere Busdachbereich 22 ist durch vergleichsweise dünne und leichte Sandwichstrukturelemente gebildet.

In der Sandwich-Oberwand 6 des jeweiligen Sandwichmodules 18, 19, 20 ist hier zudem eine mit gestrichelten Linien angedeutete, dicht schließende Wartungsklappe 23 angebracht.

### Bezugszeichenliste

- 1: Elektrobus
- 2: Bus-Seitenwand
- 3: Bus-Seitenwand
- 4: Sandwichstrukturelement
- 5: Sandwich-Unterwand
- 6: Sandwich-Oberwand
- 7: seitliche Begrenzungswand
- 8: seitliche Begrenzungswand
- 9: Versteifungsrippen
- 10: Komponenten-Kompartiments
- 11: Pfeil
- 12: Schützbox
- 13: Traktionsbatterien
- 14: Kabelbaum
- 15: Zusatzaggregat
- 16: Komponenten-Kühlsystem
- 17: Kühlplatte
- 18: Sandwichstrukturmodul
- 19: Sandwichstrukturmodul
- 20: Sandwichstrukturmodul
- 21: Dichtung
- 22: vorderer Busdachbereich
- 23: Wartungsklappe

## Patentansprüche

1. Kraftfahrzeug mit einem Elektroantrieb, insbesondere Elektrobus (1), bei dem im Dachbereich Komponenten des Elektroantriebs, insbesondere wenigstens eine Traktionsbatterie (13) und/oder wenigstens ein Zusatzaggregat (15), angeordnet sind,
wobei das Fahrzeugdach zumindest teilweise durch wenigstens ein mehrschichtiges Dachstrukturteil als Sandwichstrukturelement (4) gebildet ist,
wobei das Sandwichstrukturelement (4) eine Sandwich-Unterwand (5) als Dachboden und eine davon durch einen Zwischenraum wenigstens in der Höhe der Komponenten (13, 15) beabstandete Sandwich-Oberwand (6) als Dachaußenwand aufweist, und
wobei die Sandwich-Unterwand (5) und die Sandwich-Oberwand (6) mit einer Struktur aus Versteifungselementen (9) verbunden sind mit zwischen den Versteifungselementen (9) liegenden Aufnahmeräumen als Komponenten-Kompartiments (10), in denen die Komponenten des Elektroantriebs aufnehmbar und angeordnet sind;
**dadurch gekennzeichnet, dass** die im Sandwichstrukturelement (4) aufgenommenen Komponenten ein Traktionsbatteriesystem aufweisen, wobei bevorzugt vorgesehen ist, dass dieses Traktionsbatteriesystem eine Schützbox (12), ein Batteriemanagementsystem (BMS), Zellen, Zellmodule, Zellmodulcontroller, eine Kühlung und wenigstens einen Kabelbaum (14) als 12V-Kabelbaum und/oder 24V-Kabelbaum und/oder Hochvolt-Kabelbaum aufweist; und
dass wenigstens eine weitere Komponente als Zusatzaggregat (15) im Sandwichstrukturelement (4) aufgenommen ist, insbesondere eine Klimaanlage, ein Hochvoltverteiler, Ladegeräte, Inverter, Heizaggregate, Bremswiderstände, ein Pantograph-Ladesystem, sowie Kühlungsaggregate mit insbesondere Pumpen, Lüfter, Ventilen, Kühler, Chiller, und/oder Verbindungselemente zur Montage der Komponenten in den Komponenten-Kompartiments (10).

2. Kraftfahrzeug nach Anspruch 1, **dadurch gekennzeichnet, dass** das Kraftfahrzeug ein Nutzfahrzeug, insbesondere ein Elektrobus (1), ist, das mit einem ausschließlichen Elektroantrieb oder mit einem Elektroantrieb und einem zusätzlichen Verbrennungsmotor als Hybridfahrzeug ausgerüstet ist.

3. Kraftfahrzeug nach Anspruch 1 oder Anspruch 2, **dadurch gekennzeichnet,**
**dass** die Sandwich-Unterwand (5) und/oder die Sandwich-Oberwand (6) ein flächiges Strangpressprofil ist und/oder
**dass** die Sandwich-Unterwand (5) und/oder die Sandwich-Oberwand (6) eine umgeformte Blechplatine als materialeinheitliche Blechplatine gleicher Stärke oder als Kombination unterschiedlicher Blechplatinenteile ist.

4. Kraftfahrzeug nach einem der Ansprüche 1 bis 3, **dadurch gekennzeichnet, dass** die Sandwich-Unterwand (5) und/oder die Sandwich-Oberwand (6) zumindest in Teilbereichen Versteifungsrippen und/oder Designelemente aufweisen.

5. Kraftfahrzeug nach einem der Ansprüche 1 bis 4, **dadurch gekennzeichnet,**
**dass** die Versteifungselemente (9) zwischen der Sandwich-Unterwand (5) und der Sandwich-Oberwand (6) längs und/oder quer sowie vertikal zum Fahrzeug ausgerichtet und angeordnet sind, dergestalt, dass Versteifungselemente (9) untereinander und Versteifungselemente (9) mit Sandwich-Seitenwänden (7, 8) quaderförmige Komponenten-Kompartiments (10) ausbilden, die in ihrer Größe den aufzunehmenden Komponenten des Elektroantriebs für Einzel- oder Mehrfachanordnungen in dem jeweiligen Komponenten-Kompartiment (10), insbesondere der Größe von Traktionsbatterien (13), angepasst sind.

6. Kraftfahrzeug nach Anspruch 5, **dadurch gekennzeichnet,**
**dass** die Versteifungselemente zwischen der Sandwich-Unterwand (5) und der Sandwich-Oberwand (6) Versteifungsrippen (9) als einfache Träger und/oder Fachwerke sind, und/oder
**dass** die Versteifungselemente Schaumwerkstoffelemente sind und/oder die Versteifungsrippen mit Schaumwerkstoffen ergänzt sind und/oder wenigstens ein Komponenten-Kompartiment ausgeschäumt ist.

7. Kraftfahrzeug nach einem der Ansprüche 1 bis 6, **dadurch gekennzeichnet,**
**dass** die Sandwich-Unterwand (5) und die Sandwich-Oberwand (6), insbesondere im Bereich von Fahrzeugseitenwänden (2, 3), zur Ausbildung dichter seitlicher Begrenzungswände verbunden oder verbindbar sind, und
**dass** das Sandwichstrukturelement (4) als Fahrzeugdach auf die FahrzeugSeitenwände (2, 3) aufgesetzt ist und dort, insbesondere durch Verschrauben und/oder Kleben und/oder Schweißen und/oder Nieten, mit den Fahrzeug-Seitenwänden (2, 3) dicht verbunden ist.

8. Kraftfahrzeug nach einem der Ansprüche 1 bis 7, **dadurch gekennzeichnet,**
**dass** das Sandwichstrukturelement als Dachstrukturteil wasserdicht mit wasserdichten Komponenten-Kompartiments (10) ausgebildet ist, und
**dass** die Komponenten mit wasserdichten Komponentengehäusen und/oder in nicht wasserdichten Komponentengehäusen verbaut sind.

9. Kraftfahrzeug nach einem der Ansprüche 1 bis 8, **dadurch gekennzeichnet, dass** im oder am Sandwichstrukturelement ein Komponentenkühlsystem vorgesehen ist mit von einem Kühlmedium, insbesondere von Wasser, Wasser-Glykol oder Kältemittel, durchströmten Kühlsystemelementen, wobei bevorzugt vorgesehen ist, dass zumindest ein Teil der Sandwich-Unterwand (5) als Kühlsystemelement, vorzugweise als auf die Sandwich-Unterwand (5) montierte Kühlplatte (17), ausgebildet ist und/oder dass kühlmitteldurchströmte Kühlsystemelemente durch Wandbereiche der Komponenten-Kompartiments (10) gebildet sind, insbesondere eine Verrohrung intern im Sandwichstrukturelement (4) oder extern für eine Versorgung geführt ist.

10. Kraftfahrzeug nach einem der Ansprüche 1 bis 9, **dadurch gekennzeichnet, dass** das Sandwichstrukturelement (4) den gesamten Dachbereich des Kraftfahrzeugs, insbesondere eines Elektrobus (1), bildet.

11. Kraftfahrzeug nach einem der Ansprüche 1 bis 9, **dadurch gekennzeichnet, dass** das Sandwichstrukturelement (4) nur einen Teil des Dachbereichs bildet und der übrige Dachbereich (22) durch die Sandwich-Unterwand (5) als Dachboden oder aus vergleichsweise dünneren und leichteren Sandwichstrukturelementen gebildet ist.

12. Kraftfahrzeug nach einem der Ansprüche 1 bis 11, **dadurch gekennzeichnet, dass** das Sandwichstrukturelement (4) als Baukasten zumindest in Teilbereichen aus an Vertikalwänden dicht aneinandergefügten Sandwichstrukturmodulen (18, 19, 20) gebildet ist, wobei bevorzugt vorgesehen ist, dass jedes Sandwichstrukturmodul (18, 19, 20) wenigstens ein Komponenten-Kompartiment (10) ausbildet.

13. Kraftfahrzeug nach einem der Ansprüche 1 bis 12, **dadurch gekennzeichnet, dass** am Sandwichstrukturelement (4) und/oder an den Sandwichstrukturmodulen (18, 19, 20) seitlich und/oder oben wenigstens eine Wartungsklappe angeordnet ist.

## Claims

1. A motor vehicle comprising an electric drive, in particular an electric bus (1), in which components of the electric drive, in particular at least one traction battery (13) and/or at least one auxiliary assembly (15), are arranged in the roof region,
wherein the vehicle roof is at least partially formed by at least one multilayer roof structural part as a sandwich structural element (4),
wherein the sandwich structural element (4) has a sandwich lower wall (5) as a roof base and a sandwich upper wall (6), which is spaced apart from said sandwich lower wall by an intermediate space at least at the height of the components (13, 15), as a roof outer wall, and wherein the sandwich lower wall (5) and the sandwich upper wall (6) are connected to a structure comprising reinforcing elements (9) with receiving spaces situated between the reinforcing elements (9) as component compartments (10) in which the components of the electric drive can be received and are arranged,
**characterized in that** the components received in the sandwich structural element (4) have a traction battery system, wherein provision is preferably made for this traction battery system to have a protective box (12), a battery management system (BMS), cells, cell modules, cell module controllers, a cooling arrangement and at least one cable harness (14) as a 12 V cable harness and/or a 24 V cable harness and/or a high-voltage cable harness; and
**in that** at least one further component as an auxiliary assembly (15) is received in the sandwich structural element (4), in particular an air-conditioning system, a high-voltage distributor, charging devices, inverters, heating assemblies, braking resistors, a pantograph charging system, and cooling assemblies with, in particular, pumps, fans, valves, coolers, chillers and/or connecting elements for mounting the components in the component compartments (10).

2. The motor vehicle according to Claim 1, **characterized in that** the motor vehicle is a commercial vehicle, in particular an electric bus (1), which is equipped with an exclusive electric drive or with an electric drive and an additional internal combustion engine as a hybrid vehicle.

3. The motor vehicle according to Claim 1 or Claim 2, **characterized**
**in that** the sandwich lower wall (5) and/or the sandwich upper wall (6) are/is a flat extruded profile and/or
**in that** the sandwich lower wall (5) and/or the sandwich upper wall (6) are/is a shaped sheet-metal circuit board as a sheet-metal circuit board of the same material and of the same thickness or as a combination of different sheet-metal circuit board parts.

4. The motor vehicle according to one of Claims 1 to 3, **characterized in that** the sandwich lower wall (5) and/or the sandwich upper wall (6) have reinforcing ribs and/or design elements at least in subregions.

5. The motor vehicle according to one of Claims 1 to 4, **characterized**
**in that** the reinforcing elements (9) between the sandwich lower wall (5) and the sandwich upper wall (6) are oriented and are arranged longitudinally and/or transversely and also vertically in relation to the vehicle in such a way that reinforcing elements (9) amongst themselves and reinforcing elements (9) and sandwich side walls (7, 8) form cuboidal component compartments (10) which, in respect of their size, are matched to the components to be received of the electric drive for individual or multiple arrangements in the respective component compartment (10), in particular to the size of traction batteries (13).

6. The motor vehicle according to Claim 5, **characterized**
**in that** the reinforcing elements between the sandwich lower wall (5) and the sandwich upper wall (6) are reinforcing ribs (9) as simple carriers and/or frameworks, and/or
**in that** the reinforcing elements are foam material elements and/or the reinforcing ribs are supplemented with foam materials and/or at least one component compartment is foamed.

7. The motor vehicle according to one of Claims 1 to 6, **characterized**
**in that** the sandwich lower wall (5) and the sandwich upper wall (6), in particular in the region of the vehicle side walls (2, 3), are connected or can be connected to form leaktight lateral boundary walls, and
**in that** the sandwich structural element (4) as a vehicle roof is mounted onto the vehicle side walls (2, 3) and, there, is connected in a leaktight manner to the vehicle side walls (2, 3), in particular by screw connection and/or adhesive bonding and/or welding and/or riveting.

8. The motor vehicle according to one of Claims 1 to 7, **characterized**
**in that** the sandwich structural element as a roof structural part is designed in a watertight manner with watertight component compartments (10), and
**in that** the components are installed with watertight component housings and/or in non-watertight component housings.

9. The motor vehicle according to one of Claims 1 to 8, **characterized in that** a component cooling system with cooling system elements through which a cooling medium, in particular water, water/glycol or refrigerant, flows, is provided in the or on the sandwich structural element, wherein provision is preferably made for at least one portion of the sandwich lower wall (5) to be designed as a cooling system element, preferably as a cooling plate (17) mounted onto the sandwich lower wall (5), and/or **in that** cooling system elements through which a coolant flows are formed by wall regions of the component compartments (10), in particular a pipe system is guided internally in the sandwich structural element (4) or externally for supply purposes.

10. The motor vehicle according to one of Claims 1 to 9, **characterized in that** the sandwich structural element (4) forms the entire roof region of the motor vehicle, in particular of an electric bus (1).

11. The motor vehicle according to one of Claims 1 to 9, **characterized in that** the sandwich structural element (4) forms only a portion of the roof region and the rest of the roof region (22) is formed by the sandwich lower wall (5) as a roof base or from comparatively thinner and lighter-weight sandwich structural elements.

12. The motor vehicle according to one of Claims 1 to 11, **characterized in that** the sandwich structural element (4) as a construction unit is formed at least in subregions from sandwich structural modules (18, 19, 20) which are joined to one another in a leaktight manner on vertical walls, wherein provision is preferably made for each sandwich structural module (18, 19, 20) to form at least one component compartment (10).

13. The motor vehicle according to one of Claims 1 to 12, **characterized in that** at least one servicing hatch is arranged on the side and/or at the top of the sandwich structural element (4) and/or the sandwich structural modules (18, 19, 20).

## Revendications

1. Véhicule automobile muni d'un entraînement électrique, notamment bus électrique (1), dans lequel des composants de l'entraînement électrique, notamment au moins une batterie de traction (13) et/ou au moins une unité supplémentaire (15), sont agencés dans la zone de toit,
le toit de véhicule étant formé au moins partiellement par au moins une partie structurale de toit multicouche en tant qu'élément structural en sandwich (4), l'élément structural en sandwich (4) comprenant une paroi inférieure de sandwich (5) en tant que fond de toit et une paroi supérieure de sandwich (6) espacée de celle-ci par un espace intermédiaire au moins dans la hauteur des composants (13, 15) en tant que paroi extérieure de toit, et
la paroi inférieure de sandwich (5) et la paroi supérieure de sandwich (6) étant reliées avec une structure d'éléments de renfort (9) munie d'espaces de réception situés entre les éléments de renfort (9) en tant que compartiments de composants (10), dans lesquels les composants de l'entraînement électrique peuvent être reçus et sont agencés ;
**caractérisé en ce que** les composants reçus dans l'élément structural en sandwich (4) comprennent un système de batterie de traction, il étant de préférence prévu que ce système de batterie de traction comprend une boîte de protection (12), un système de gestion de batterie (BMS), des cellules, des modules cellulaires, des contrôleurs de modules cellulaires, un refroidissement et au moins un faisceau de câbles (14) en tant que faisceau de câbles 12 V et/ou faisceau de câbles 24 V et/ou faisceau de câbles à haute tension ; et
**en ce qu'**au moins un composant supplémentaire est reçu dans l'élément structural en sandwich (4) en tant qu'unité supplémentaire (15), notamment une installation climatique, un diviseur à haute tension, des appareils de chargement, des inverseurs, des unités de chauffage, des résistances de freinage, un système de chargement de pantographe, ainsi que des unités de refroidissement munies notamment de pompes, d'aérateurs, de soupapes, de refroidisseurs, d'appareils frigorifiques et/ou d'éléments de liaison pour le montage des composants dans les compartiments de composants (10).

2. Véhicule automobile selon la revendication 1, **caractérisé en ce que** le véhicule automobile est un véhicule utilitaire, notamment un bus électrique (1), qui est équipé d'un entraînement électrique exclusif ou d'un entraînement électrique et d'un moteur à combustion supplémentaire en tant que véhicule hybride.

3. Véhicule automobile selon la revendication 1 ou la revendication 2, **caractérisé**
**en ce que** la paroi inférieure de sandwich (5) et/ou la paroi supérieure de sandwich (6) est un profilé extrudé plat et/ou
**en ce que** la paroi inférieure de sandwich (5) et/ou la paroi supérieure de sandwich (6) est une platine de tôle déformée en tant que platine de tôle en une seule matière de même épaisseur ou en tant que combinaison de différentes parties de platine de tôle.

4. Véhicule automobile selon l'une quelconque des revendications 1 à 3, **caractérisé en ce que** la paroi inférieure de sandwich (5) et/ou la paroi supérieure de sandwich (6) comprennent des nervures de renfort et/ou des éléments de conception au moins dans des zones partielles.

5. Véhicule automobile selon l'une quelconque des revendications 1 à 4, **caractérisé**
**en ce que** les éléments de renfort (9) sont orientés et agencés entre la paroi inférieure de sandwich (5) et la paroi supérieure de sandwich (6) longitudinalement et/ou transversalement, ainsi que verticalement par rapport au véhicule, de telle sorte que des éléments de renfort (9) entre eux et des éléments de renfort (9) avec des parois latérales de sandwich (7, 8) forment des compartiments de composants parallélépipédiques (10), qui sont adaptés en termes de leur taille aux composants à recevoir de l'entraînement électrique pour des agencements individuels ou multiples dans le compartiment de composant respectif (10), notamment à la taille de batteries de traction (13).

6. Véhicule automobile selon la revendication 5, **caractérisé**
**en ce que** les éléments de renfort entre la paroi inférieure de sandwich (5) et la paroi supérieure de sandwich (6) sont des nervures de renfort (9) en tant que supports simples et/ou charpentes, et/ou en ce que les éléments de renfort sont des éléments en matériau moussé et/ou les nervures de renfort sont complétées avec des matériaux moussés et/ou au moins un compartiment de composant est moussé.

7. Véhicule automobile selon l'une quelconque des revendications 1 à 6, **caractérisé**
**en ce que**
la paroi inférieure de sandwich (5) et la paroi supérieure de sandwich (6) sont reliées ou peuvent être reliées, notamment dans la zone des parois latérales de véhicule (2, 3), pour la formation de parois de délimitation latérales étanches, et
**en ce que** l'élément structural en sandwich (4) est disposé en tant que toit de véhicule sur les parois latérales de véhicule (2, 3) et y est relié de manière étanche, notamment par vissage et/ou collage et/ou soudage et/ou rivetage, avec les parois latérales de véhicule (2, 3).

8. Véhicule automobile selon l'une quelconque des revendications 1 à 7, **caractérisé**
**en ce que** l'élément structural en sandwich est configuré en tant que partie structurale de toit sous forme étanche à l'eau avec des compartiments de composants étanches à l'eau (10), et
**en ce que** les composants sont construits avec des boîtiers de composant étanches à l'eau et/ou dans des boîtiers de composant non étanches à l'eau.

9. Véhicule automobile selon l'une quelconque des revendications 1 à 8, **caractérisé en ce qu**'un système de refroidissement de composant est prévu dans ou sur l'élément structural en sandwich, muni d'éléments de système de refroidissement traversés par un milieu de refroidissement, notamment de l'eau, de l'eau-glycol ou des agents réfrigérants, il étant de préférence prévu qu'au moins une partie de la paroi inférieure de sandwich (5) est configurée en tant qu'élément de système de refroidissement, de préférence en tant que plaque de refroidissement (17) montée sur la paroi inférieure de sandwich (5), et/ou que des éléments de système de refroidissement traversés par un milieu de refroidissement sont formés par des zones de paroi des compartiments de composants (10), un tubage étant notamment acheminé en interne dans l'élément structural en sandwich (4) ou en externe pour une alimentation.

10. Véhicule automobile selon l'une quelconque des revendications 1 à 9, **caractérisé en ce que** l'élément structural en sandwich (4) forme l'ensemble de la zone de toit du véhicule automobile notamment d'un bus électrique (1).

11. Véhicule automobile selon l'une quelconque des revendications 1 à 9, **caractérisé en ce que** l'élément structural en sandwich (4) forme uniquement une partie de la zone de toit et la zone de toit restante (22) est formée par la paroi inférieure de sandwich (5) en tant que fond de toit ou à partir d'éléments structuraux en sandwich comparativement plus minces et plus légers.

12. Véhicule automobile selon l'une quelconque des revendications 1 à 11, **caractérisé en ce que** l'élément structural en sandwich (4) est formé en tant que kit de construction au moins dans des zones partielles à partir de modules structuraux en sandwich (18, 19, 20) joints les uns aux autres de manière étanche, il étant de préférence prévu que chaque module structural en sandwich (18, 19, 20) forme au moins un compartiment de composant (10).

13. Véhicule automobile selon l'une quelconque des revendications 1 à 12, **caractérisé en ce qu**'au moins un clapet d'entretien est agencé sur l'élément structural en sandwich (4) et/ou sur les modules structuraux en sandwich (18, 19, 20) latéralement et/ou sur le dessus.
